# EUROPEAN PATENT APPLICATION

(11) **EP 3 527 475 A1**
(43) Date of publication of application: **21.08.2019**
(21) Application number: 17860686.9
(22) Date of filing: 26.09.2017
(51) Int. Cl.: B62M 6/45, B60L 15/20

(54) **CONTROL SYSTEM, SERVER, CONTROL METHOD, AND PROGRAM**

(30) Priority: 11.10.2016 JP 2016199899
(71) Applicant: Omron Corporation, Kyoto-shi, Kyoto 600-8530 (JP)
(72) Inventor: WADA, Junichi, Kyoto-shi Kyoto 600-8530 (JP); TAKATSUKA, Hiromasa, Kyoto-shi Kyoto 600-8530 (JP); KASAI, Kazuki, Kyoto-shi Kyoto 600-8530 (JP)
(74) Representative: Horn Kleimann Waitzhofer Patentanwälte PartG mbB
(86) International application number: PCT/JP2017/034736
(87) International publication number: WO 2018/070235

(57) **Abstract**

A control system including a user information obtaining unit for obtaining information about a user of a bicycle; a model obtaining unit configured to obtain, on the basis of the user information, a control model used for controlling the auxiliary power, the control model corresponding to an athletic ability level of the user, and auxiliary power control unit configured to control, on the basis of the obtained control model, the auxiliary power generated by the driving device.

## Description

### TECHNICAL FIELD

The present invention relates to a technology for controlling a device that assists traveling by means of motive power.

### RELATED ART

Businesses that allow multiple users to share electric assist bicycles have become popular. In an electric assist bicycle sharing business, for example, a user can borrow an electric assist bicycle at a station, and return the bicycle at another station. After that, the electric assist bicycle can be used again by another user near the station where the bicycle was returned. In this manner, one electric assist bicycle can be used repeatedly by various users, irrespective of gender and age.

On the other hand, a technology is known in which auxiliary power for assisting riding an electric assist bicycle is controlled in accordance with conditions such as a riding speed and an inclination of a road face (e.g. Patent Document 1). The auxiliary power supplied when riding an electric assist bicycle can reduce the load on the user.

### RELATED ART DOCUMENTS

### PATENT DOCUMENTS

Patent Document 1: JP-A-2012-121338

### SUMMARY OF THE INVENTION

### PROBLEM TO BE SOLVED BY THE INVENTION

However, if the same control of auxiliary power is performed for all users, the auxiliary power may not be appropriate in some cases because athletic ability differs between the users.

Assume, for example, a case in which the auxiliary power is set on the assumption that a user with average athletic ability uses the electric assist bicycle. In this case, if a user with low athletic ability uses the electric assist bicycle, the ride may be unstable because the auxiliary power is insufficient when riding up a slope. Conversely, if a user with high athletic ability uses the electric assist bicycle, the auxiliary power may be excessive, which may lead to accidents due to sudden acceleration.

In other words, in the control of the auxiliary power, there is room for improvement in terms of that the athletic ability of users has not been considered.

The present invention has been conceived in consideration with the above circumstances, and a purpose of the present invention is to provide a technology for controlling the auxiliary power in accordance with the athletic ability of the user who uses an electric assist bicycle.

### MEANS FOR SOLVING THE PROBLEMS

A control system according to the present invention is a control system for controlling a driving device that generates auxiliary power for assisting a force that rotates a wheel of a bicycle, the control system including:
a user information obtaining unit configured to obtain information about a user of the bicycle;
a model obtaining unit configured to obtain a control model used for controlling the auxiliary power, the control model corresponding to an athletic ability level of the user, on the basis of the user information, and
an auxiliary power control unit configured to, on the basis of the obtained control model, control the auxiliary power generated by the driving device.

The auxiliary power is motive power for assisting riding an electric assist bicycle, and is generated by a driving device. The auxiliary power is controlled by a control system in accordance with a control model.

The control model is a reference used for controlling the auxiliary power generated by the driving device.

The control model is set on the basis of the athletic ability level for each user. In other words, one control model is associated with the athletic ability level of one user. The control system specifies the athletic ability level of the user according to user information.

User information is information about the athletic ability of the user. Examples of user information include the gender, age, height, and weight of the user.

The user information obtaining unit may also obtain user information from a terminal such as a smartphone and a tablet PC, for example. Also, the user information obtaining unit may also obtain user information from a terminal installed in the electric assist bicycle.

The control model includes a plurality of parameters.

The control model may also include, for example, the ratio of the auxiliary power with respect to the load exerted by the user as the first parameter. Specifically, the control model may include the ratio (torque ratio) between the torque of pedaling force of the user and the torque of the auxiliary power. The control system controls such that the torque ratio between the torque of pedaling force of the user and the torque of the auxiliary power achieves a predetermined value.

The torque ratio is set on the basis of the athletic ability level of the user, for example. The torque ratio for a user with high athletic ability can also be set to a comparatively low value, for example. Also, the torque ratio for a user with low athletic ability can also be set to a comparatively high value, for example. Note, that the torque ratio is set so as not to exceed a reference defined by law.

Setting the torque ratio appropriately makes it possible to prevent sudden acceleration and unstable ride that may lead to an accident.

The control model may also include, as a second parameter, a threshold value of a speed at which the ratio of the auxiliary power with respect to the load exerted by the user is decreased. Also, the control model may also include, as a third parameter, a threshold value of a speed at which the auxiliary power is stopped.

The threshold value of a speed at which the ratio of the auxiliary power is decreased and the threshold value of a speed at which the auxiliary power is stopped may also be set according to a standard defined by law, for example. The threshold value of a speed at which the ratio of the auxiliary power is decreased and the threshold value of a speed at which the auxiliary power is stopped may also be changed according to the athletic ability level of the user.

Setting the threshold value of a speed at which the ratio of the auxiliary power is decreased and the threshold value of a speed at which the auxiliary power is stopped according to the athletic ability level of the user makes it possible to prevent an accident caused by excessive speed and sudden acceleration.

Note, that the control model may also include a parameter other than the above three parameters.

The control model is set in accordance with athletic ability levels of the users. The athletic ability level is information divided by athletic ability of the user. The athletic ability level is specified by the user information.

The athletic ability level may also include the weight of the user, for example. In this case, the control model is set by weight. In this case, the athletic ability level may be divided into weight ranges such as 30 to 40 kg, 40 to 50 kg, ..., 80 to 90 kg, 90 to 100 kg, for example, and one control model may also be set for each section.

In this manner, dividing the control model by weight with fixing a power-weight ratio to a predetermined value makes it possible to reduce the number of the control models, and thus the control of the auxiliary power generated by the driving device can be simplified.

The athletic ability level may also include the weight and height of the user. In such a case, the control model may also be set for each of a plurality of sections divided by weight and height.

The athletic ability level may also include the gender and age of the user. In this case, the control model may also be set for each of a plurality of sections divided by gender and age.

Additionally, the athletic ability level may also include the gender, age, weight and body height of the user. In this case, a configuration is also possible in which there are large sections divided by gender and age, and small sections further divided by height and weight, and the control model may also be set for each small section.

This configuration makes it possible to divide the athletic ability level of the user in detail, and thus making it possible to more appropriately control the auxiliary power generated by the driving device.

The model obtaining unit may also obtain, from an external server that stores a plurality of control models for respective athletic ability levels of the users, on the basis of the user information, a control model that corresponds to the athletic ability level of the user.

Specifically, the storage region of the external server stores the control models corresponding to respective athletic ability levels. On the basis of the user information, the control model corresponding to the athletic ability level of the user is selected by the server.

With this configuration, the control models need not be managed on the control system side, and it is possible to manage the control models collectively on the server side.

Additionally, the control system may also further include a storage unit configured to store a plurality of control models for respective athletic ability levels of the users, and the model obtaining unit obtains, from the storage unit, on the basis of the user information, a control model that corresponds to the athletic ability level of the user. In this case, the control system does not communicate with an external server.

This configuration makes it possible to control the auxiliary power without performing communication with the external server.

A server that communicates with the control system according to the present invention may include: a user information obtaining unit configured to receive, from the control system according to any one of claims 1 to 7, information about a user who uses a bicycle; a storage unit configured to store a plurality of control models for respective athletic ability levels of the users; a model selection unit configured to select, out of the control models stored in the storage unit, a control model that corresponds to athletic ability of the user, and a transmission unit configured to transmit the selected control model to the control system.

This configuration makes it possible to manage all the control models collectively on the server side.

Note, that the present invention may be interpreted as a control system including at least part of the above configuration and function, or a vehicle provided with such control system. Furthermore, the present invention may also be interpreted as a method for controlling a vehicle that includes at least part of the above process. Furthermore, the present invention may also be interpreted as a program for causing a computer (processor) to execute the steps of the method, or a computer-readable recording medium that records the program in a non-transitory manner. Also, the above-described process and methods can be combined as needed and implemented as long as no technical contradiction occurs.

### EFFECTS OF THE INVENTION

According to the present invention, the auxiliary power can be controlled appropriately in accordance with the athletic ability of the user who uses the electric assist bicycle.

### BRIEF DESCRIPTION OF THE DRAWINGS

FIG. 1 is a block diagram illustrating a functional configuration of a control system according to a first embodiment of the present invention.
FIG. 2 is a diagram illustrating a positional relationship between devices according to the first embodiment.
FIGS. 3A and 3B are diagrams illustrating an example of data structure of a
table that holds control models.
FIGS. 4A to 4C are diagrams illustrating a relationship between parameters regarding the control models.
FIG. 5 is a diagram illustrating an example of a control flow of a control device and a server according to the first embodiment.
FIG. 6A is a diagram illustrating a control of a conventional example, and FIG. 6B is a diagram illustrating a control of the first embodiment.
FIG. 7 is a block diagram illustrating a functional configuration of a control system according to a second embodiment of the present invention.

### EMBODIMENTS OF THE INVENTION

The present invention relates to the control of auxiliary power for a driving device that assists riding an electric assist bicycle.

### First Embodiment

### Overview of System

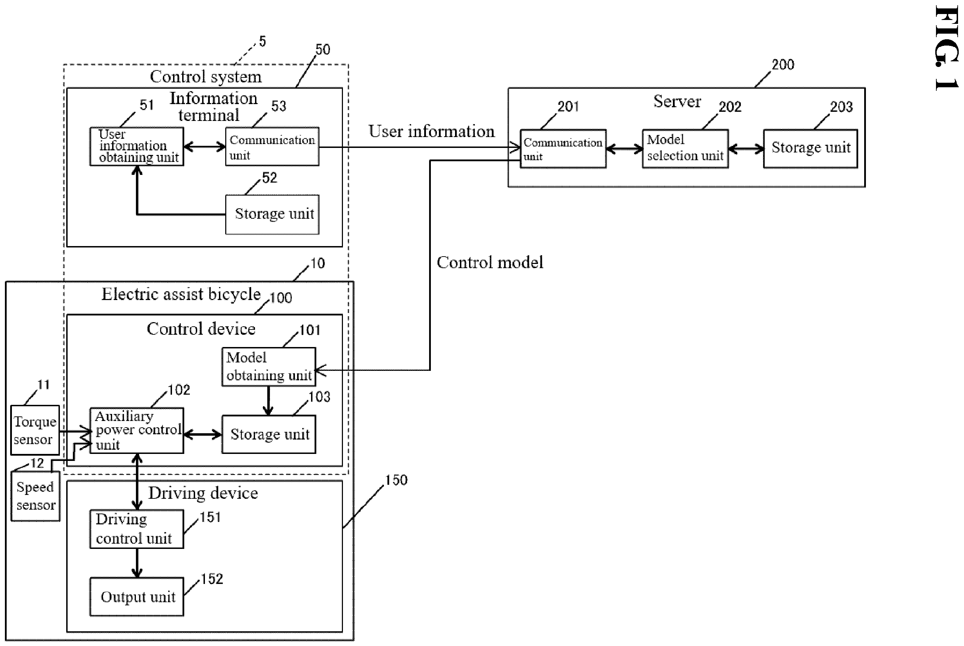

FIG. 1 is a block diagram illustrating a functional configuration of a control system 5 according to a first embodiment.

The control system 5 according to the first embodiment includes an information terminal 50 and a control device 100. The devices included in the control system 5 can communicate with a server 200. A torque sensor 11, a speed sensor 12, the control device 100, and a driving device 150 are devices mounted on an electric assist bicycle 10.

Note, that the control device 100 can be constituted by an information processing apparatus including a CPU (a processor), a main storage device (a memory), an auxiliary storage device (e.g. a hard disk drive, a solid-state drive, a flash memory, or the like). Processes performed by the control device 100 are executed by loading programs stored in the auxiliary storage device into the main storage device, and executing the programs by the CPU.

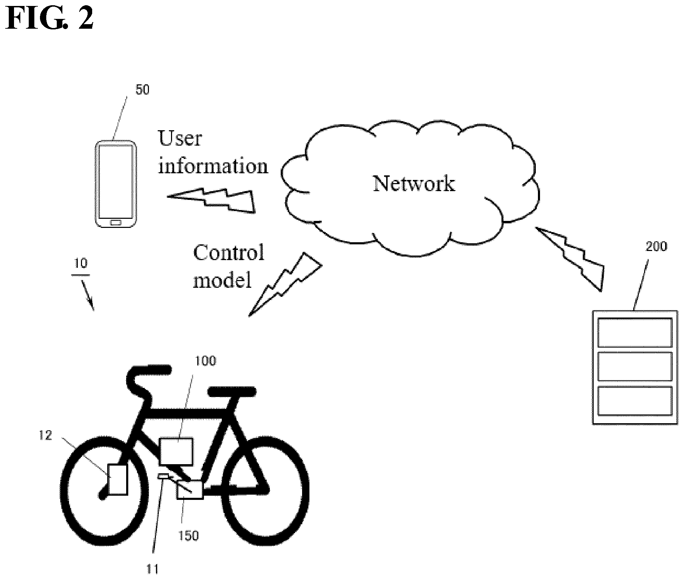

FIG. 2 is a diagram illustrating a positional relationship between devices according to the first embodiment. As shown in the example of FIG. 2, an information terminal 50 transmits the user information to the server 200 via a network.

The control device 100 receives the control model from the server 200. The control device 100 also obtains, from the torque sensor 11, the torque generated by the pedaling force of the user. Furthermore, the control device 100 obtains riding speed of the electric assist bicycle 10 from the speed sensor 12.

The control device 100 controls the auxiliary power generated by the driving device 150 on the basis of the control model, the torque generated by the pedaling force of the user, and the riding speed. The control of auxiliary power will be described later.

The description returns to FIG. 1. The control system 5 is a system that performs control in accordance with the athletic ability of the user by controlling the driving device 150 with use of a control model that corresponds to information about the user who uses the electric assist bicycle 10.

Hereinafter, the configuration of the control system 5 and the server 200 will be described separately.

### Configuration of Information Terminal

The information terminal 50 includes a user information obtaining unit 51, a storage unit 52, and a communication unit 53. The information terminal 50 is, for example, a mobile terminal such as a smartphone, a tablet PC, or a laptop PC. Note, that the components of the information terminal 50 can be realized by a CPU (processor) included in the information terminal 50 executing programs stored in the storage unit 52.

The user information obtaining unit 51 obtains user information from the storage unit 52. Specifically, an application for transmitting a control request to the electric assist bicycle 10 is installed in the information terminal 50. When the user starts up the application, the information terminal 50 displays a log-in screen on a display (not shown). When log-in is executed, the user information obtaining unit 51 then obtains the user information of the user who logs in from the storage unit 52. Here, the user information is information about the gender, age, height, weight, and the like of the user, that relate to the athletic ability of the user.

After that, the communication unit 53 transmits the user information obtained from the storage unit 52 to the server 200.

### Configuration of Server

The server 200 includes a communication unit 201, a model selection unit 202, and a storage unit 203. The communication unit 201 receives the user information from the information terminal 50.

The model selection unit 202 obtains, from the storage unit 203, the control model corresponding to the user information received from the information terminal 50. The control models corresponding to the athletic ability levels of users are stored in the storage unit 203.

The model selection unit 202 specifies the athletic ability level of the user on the basis of the information included in the user information, such as the gender, age, height, weight, and the like of the user. The model selection unit 202 selects the control model corresponding to the athletic ability level of the user out of the control models stored in the storage unit 203.

The structure of a table that holds the control models in the storage unit 203 will be described.

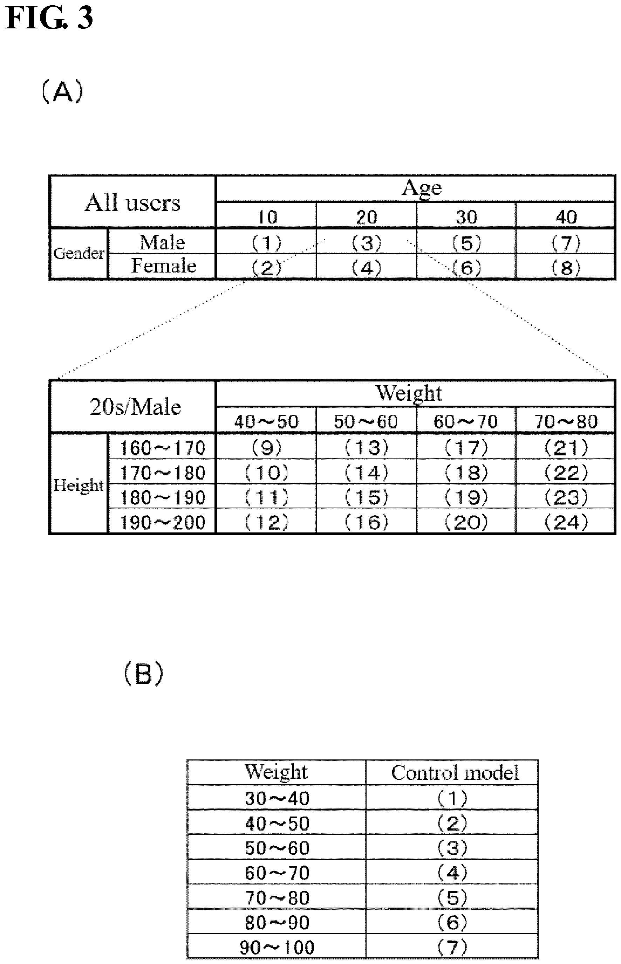

FIGS. 3A and 3B are diagrams illustrating an example of the data structure of the table that holds the control models. FIG. 3A is an example of athletic ability levels of the users divided by gender, age, height, and weight of the user. The upper table of FIG. 3A relates to all the users, and is divided by age and gender.

The rows in the upper table of FIG. 3A relate to gender, and male and female are associated with respective rows. Also, the columns in the upper table of FIG. 3A are each associated with different ages, namely 10s, 20s, 30s, and 40s. On the other hand, the lower table of FIG. 3A relates to males in their 20s, and this table corresponds to the section (3) in the upper table of FIG. 3A.

Although not illustrated, the sections other than the section (3), namely, the sections (1), (2), (4) to (8) in the upper table of FIG. 3A are also associated with tables having the same structure as the section (3). The sections (9) to (24) in the lower table of FIG. 3A correspond to the athletic ability levels of males in their 20s. One control model is associated with each of the sections (9) to (24).

Hereinafter, the sections relating to all the users, such as the sections (1) to (8) in the upper table of FIG. 3A, are called "large sections". The sections relating to a part of the users in the large sections, such as the sections (9) to (24) in the lower table of FIG. 3A, are called "small sections".

Hereinafter, selection of the control model will be illustrated with a specific example. A case will be illustrated in which a 25-year-old man uses the electric assist bicycle 10. The server 200 obtains, via the communication unit 201, user information about the 25-year-old man who uses the electric assist bicycle 10.

The model selection unit 202 obtains the age "25" and the gender "male", from the user information. The model selection unit 202 then selects a large section (3) that corresponds to "age: 25" and "gender: male", out of the upper table of FIG. 3A.

The model selection unit 202 then obtains the height "175" and the weight "67" of this user. The model selection unit 202 then selects the small section (18) out of the lower table of FIG. 3A that corresponds to the large section (3). Next, the model selection unit 202 selects the control model corresponding to the small section (18).

If the height of a male user in his 20s is "161" and the weight is "49", the model selection unit 202 selects the small section (9).

If the height of a male user in his 20s is "183" and the weight is "75", the model selection unit 202 selects the small section (23).

FIG. 3B is an example of athletic ability levels of the users divided on the basis of weight of the user. The table of FIG. 3B relates to all the users, and the sections are divided by weight. In the example of FIG. 3B, users in the 30-kg weight class (30-40 kg), 40-kg weight class, 50-kg weight class, 60-kg weight class, 70-kg weight class, 80-kg weight class, and 90-kg weight class are assigned the athletic ability levels (1) to (7), respectively. Also, one control model is associated with each of the athletic ability levels (1) to (7).

Specifically, in the example of FIG. 3B, the athletic ability level includes only the weight.

The ratio between the motive power and weight is called "power-weight ratio". In the example of FIG. 3B, for example, fixing the power-weight ratio to 2.0 to 3.0 W/kg in accordance with the average value of the user makes it possible to select the control model in accordance with weight. With this configuration, the number of control models to be used can be reduced, and thus the control of the electric assist bicycle 10 can be simplified.

Next, the configuration of each control model will be described.

In first embodiment, the control model is constituted by three parameters, namely, the torque ratio, an auxiliary power attenuation speed, and an auxiliary power stop speed.

The torque ratio (Tm/Th) is the ratio between the torque (Tm) generated by the auxiliary power and the torque (Th) generated by pedaling force of the user. The auxiliary power is motive power that is generated by the driving device 150 that will be described later, and that assists riding the bike. The higher the torque ratio (Tm/Th) is, the user needs less effort to ride.

The auxiliary power attenuation speed is a speed (km/h) at which attenuation of the torque ratio (Tm/Th) is started. The more the riding speed exceeds the auxiliary power attenuation speed, the greater attenuation amount of the torque ratio. The auxiliary power stop speed is a speed (km/h) at which the auxiliary power is stopped. The auxiliary power attenuation speed and the auxiliary power stop speed may also be set according to a standard defined by law, for example.

Next, the relationship between the above three parameters will be described. The torque ratio is controlled to a certain value from a riding speed of 0 km/h up to the auxiliary power attenuation speed (km/h).

When the riding speed of the electric assist bicycle 10 increases and exceeds the auxiliary power attenuation speed, the torque ratio is decreased gradually according to the excessive riding speed. Furthermore, when the riding speed of the electric assist bicycle 10 is increased and the speed of the electric assist bicycle 10 reaches the auxiliary power stop speed, the torque ratio is controlled to be 0. In other words, the torque ratio is controlled so as to be attenuated in proportion to the riding speed which exceeds the auxiliary power attenuation speed, and set to 0 when the riding speed reaches the auxiliary power stop speed.

The relationship between the above three parameters will be described with specific examples.

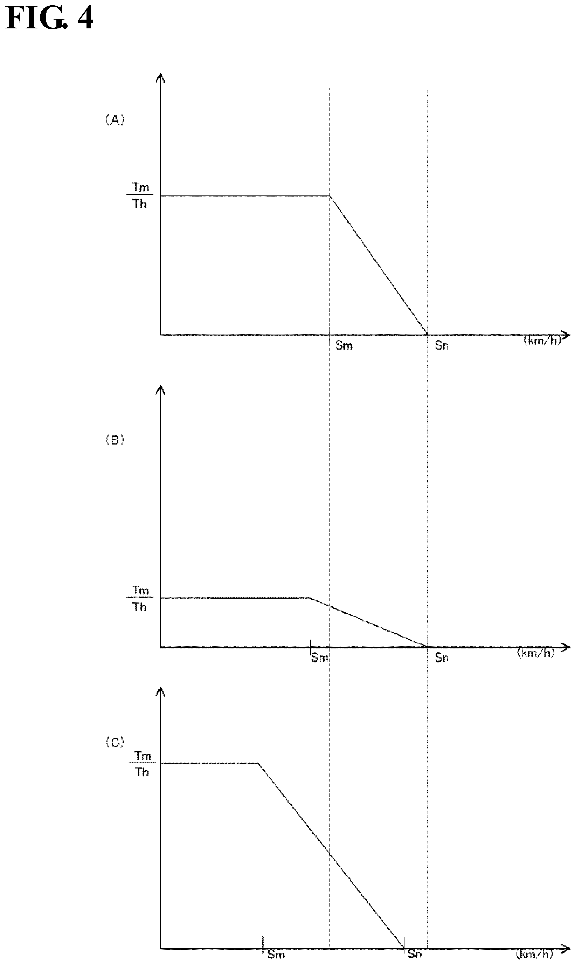

FIGS. 4A to 4C are diagrams illustrating a relationship between the parameters of the control model. In FIGS. 4A to 4C, the vertical axes correspond to the torque ratio, and the horizontal axes correspond to the riding speed (km/h) of the electric assist bicycle 10. Also, the torque ratio is denoted as Tm/Th, the auxiliary power attenuation speed is denoted as Sm, and the auxiliary power stop speed is denoted as Sn.

Note, that the torque ratio is an example of "the ratio related to the auxiliary power". Also, the auxiliary power attenuation speed is an example of "the threshold value of the speed at which the ratio related to the auxiliary power is decreased". Also, the auxiliary power stop speed is an example of "the threshold value of the speed at which the auxiliary power is stopped".

FIG. 4A shows an example of the control model used for a user with average athletic ability. In the example of FIG. 4A, the torque ratio (Tm/Th) is set to 1.0. In other words, the electric assist bicycle 10 assists the user with the same amount of torque (auxiliary power) as the torque (Tr) generated by the pedaling force of the user.

Also, once the riding speed (Km/h) exceeds the auxiliary power attenuation speed Sm, the electric assist bicycle 10 gradually attenuates the torque ratio (Tm/Th).

Furthermore, when the riding speed (km/h) reaches the auxiliary power stop speed, the electric assist bicycle 10 sets the torque ratio (Tm/Th) to 0.

Note, that the dotted lines in FIGS. 4A to 4C correspond to the auxiliary power attenuation speed Sm and the auxiliary power stop speed Sn that are set on the basis of the laws and regulations related to electric assist bicycles. In other words, in terms of laws and regulations, it is not possible to set the auxiliary power attenuation speed Sm and the auxiliary power stop speed Sn exceeding the dotted lines.

FIG. 4B shows an example of the control model used for a user with comparatively high athletic ability. In the example of FIG. 4B, the torque ratio (Tm/Th) is set to 0.3. Suppressing the torque ratio to be lower than the example of FIG. 4A makes it possible to prevent a sudden acceleration.

The auxiliary power attenuation speed Sm in the example of FIG. 4B is set lower than the auxiliary power attenuation speed Sm of the example of FIG. 4A. This configuration prevents the riding speed of an electric assist bicycle 10 from rising excessively.

FIG. 4C shows a control model used for a user with comparatively low athletic ability, such as a child. FIG. 4C is, for example, a control model applied to the user at the age of 10 to 13. In the example of FIG. 4C, the torque ratio (Tm/Th) is set to 1.2. Setting the torque ratio higher than the example of FIG. 4A can increase the assistance when riding a sloping road, thus making it possible to reduce the user's load. Also, an unstable ride when riding at a low speed can be prevented.

The auxiliary power attenuation speed Sm in the example of FIG. 4C is set lower than the auxiliary power attenuation speed Sm in the example of FIG. 4A. With this configuration, the assistance is decreased when riding at a high speed, thus making it possible to prevent an accident due to excessive speed.

Also, the auxiliary power stop speed Sn in the example of FIG. 4C is set lower than the auxiliary power stop speed Sn of the example of FIG. 4A. With this configuration, the assistance is stopped when riding at a speed at a predetermined speed or more, thus making it possible to prevent an accident due to excessive speed.

As described above, the model selection unit 202 selects the control model corresponding to the athletic ability level of the user on the basis of the user information. The communication unit 201 then transmits the control model selected by the model selection unit 202 to the control device 100.

### Configuration of Control Device

The description returns to FIG. 1. The control device 100 includes a model obtaining unit 101, an auxiliary power control unit 102, and a storage unit 103. The model obtaining unit 101 obtains, from the server 200, the control model corresponding to the athletic ability level of the user that was selected by the server 200.

The model obtaining unit 101 receives the control model selected by the model selection unit 202 from the server 200. The model obtaining unit 101 then records the selected control model in the storage unit 103 as a temporary file.

The auxiliary power control unit 102 controls the auxiliary power generated by the driving device 150 on the basis of the control model. The auxiliary power control unit 102 obtains, from a torque sensor 11, the torque (Th) generated by the pedaling force of the user. The torque sensor 11 is a sensor that is installed in a pedal part of the electric assist bicycle 10 and detects the pressure applied to the pedal part due to the pedaling force of the user.

The auxiliary power control unit 102 controls the driving device 150 such that the ratio between the torque (Th) generated by the pedaling force of the user and the torque (Tm) generated by the auxiliary power achieves the torque ratio (Tm/Th) defined as the control model. When the torque ratio (Tm/Th) defined as the control model is 1.0, for example, the auxiliary power control unit 102 controls such that torque (Th) generated by the pedaling force of the user and the torque (Tm) generated by the auxiliary power are approximately the same.

In other words, the auxiliary power control unit 102 may also calculate the torque (Tm) generated by the auxiliary power by multiplying the torque (Th) generated by the pedaling force of the user detected by the torque sensor 11 with the torque ratio (Tm/Th).

Also, the auxiliary power control unit 102 obtains the riding speed from the speed sensor 12. When the riding speed exceeds the auxiliary power attenuation speed Sm (Km/h), the auxiliary power control unit 102 controls the auxiliary power generated by the driving device 150 such that the torque ratio (Tm/Th) is attenuated in proportion to the excessive speed. Note, that the speed sensor 12 is a sensor for measuring a riding speed of the electric assist bicycle 10.

Furthermore, when the riding speed reaches the auxiliary power stop speed Sn (km/h), the auxiliary power control unit 102 controls the auxiliary power generated by the driving device 150 such that the torque ratio (Tm/Th) becomes 0.

### Configuration of Driving Device

The driving device 150 includes a driving control unit 151 and an output unit 152. The driving control unit 151 controls the drive outputted from the output unit 152 in accordance with the control performed by the auxiliary power control unit 102. The output unit 152 outputs the auxiliary power in accordance with the control performed by the drive control unit 151 to the electric assist bicycle 10.

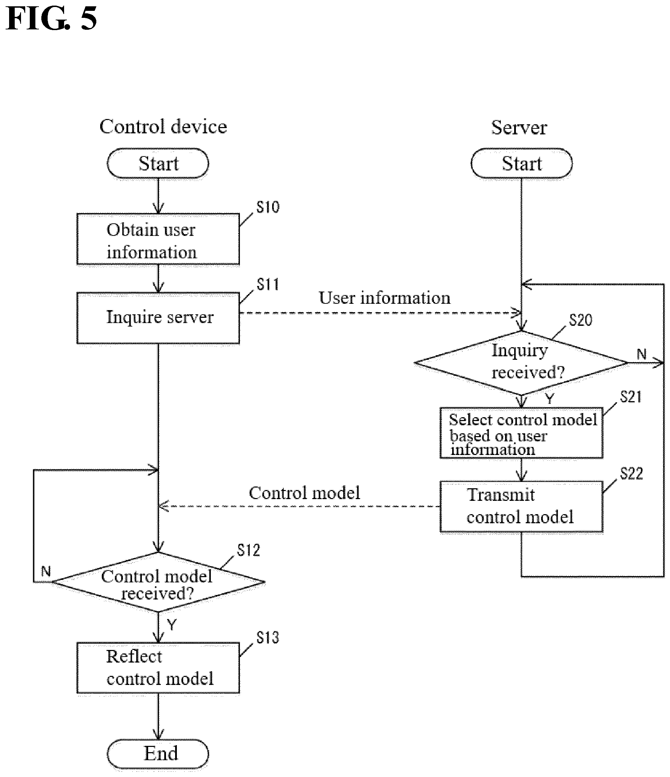

FIG. 5 is a diagram illustrating an example of a control flow executed by the control device 100 and the server 200 according to the first embodiment. The left flowchart of FIG. 5 illustrates the processes performed by the control system 5. On the other hand, the right flowchart of FIG. 5 illustrates the processes performed by the server 200.

In step S10, the control system 5 obtains the user information. After the user starts up the application, for example, the information terminal 50 performs log-in authentication, and obtains user information including the gender, age, height, weight of the user, from the storage unit 52. In step S11, the control system 5 inquires the appropriate control model from the server 200 by transmitting the user information to the server 200.

Alternatively, the control system 5 may also directly request the control device 100 to input the user information, instead of the information terminal 50.

Note, that the server 200 repeatedly executes the processes from steps S20 to S22, and receives an inquiry from the control device 100 as needed.

In step S20, the server 200 determines whether an inquiry from the control system 5 has been received. If no inquiry has been received, the server 200 executes the process of step S20 again after a predetermined period of time.

On the other hand, if an inquiry has been received, in step S21, the server 200 selects the control model on the basis of the user information. If the table of FIG. 3A has been recorded in the storage unit 203, the server 200 selects a large section in the table of FIG. 3A on the basis of the age and gender of the user. Furthermore, the server 200 selects the control model by selecting a small section on the basis of the height and weight of the user. In step S22, the server 200 transmits the selected control model to the control system 5.

In step S12, the control system 5 determines whether the control model has been received. If no control model has been received, the control system 5 executes the process of step S12 again after a predetermined period of time. On the other hand, if a control model has been received, in step S13, the control system 5 reflects the control model on the control of the auxiliary power of the electric assist bicycle 10.

The control system 5 controls the auxiliary power generated by the driving device 150 such that, for example, the ratio between the torque (Th) generated by the pedaling force of the user and the torque (Tm) generated by the auxiliary power achieves the torque ratio (Tm/Th) included in the control model.

### Effects

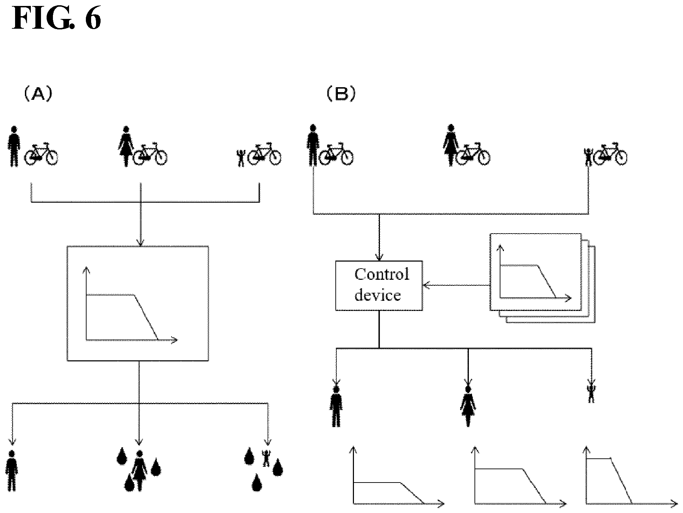

FIGS. 6A and 6B are diagrams for comparing the control according to the first embodiment with the control of a conventional example.

FIG. 6A illustrates a control in a conventional example. As shown in FIG. 6A, one common control model is applied to male, female, and child users.

It is assumed that, for example, when a male user with comparatively high athletic ability uses the electric assist bicycle 10, the auxiliary power applied to the electric assist bicycle 10 is appropriate.

As such, when a female user with average athletic ability uses the electric assist bicycle 10, the auxiliary power applied to the electric assist bicycle 10 is somewhat insufficient, and thus a load on the user increases when riding at a low speed.

When a child user with comparatively low athletic ability uses the electric assist bicycle 10, the auxiliary power applied to the electric assist bicycle 10 is considerably insufficient, which may lead to an unstable ride when riding at a low speed.

FIG. 6B illustrates the control according to the first embodiment. As shown in FIG. 6B, a control model that corresponds to the athletic ability level is applied to each of the male, female, and child users.

When a male user with comparatively high athletic ability uses the electric assist bicycle 10, for example, a control model in which the torque ratio is comparatively low is applied to the electric assist bicycle 10. By doing this, a sudden acceleration due to excessive auxiliary power can be prevented.

When a female user with average athletic ability uses the electric assist bicycle 10, a control model in which the torque ratio is moderate is applied to the electric assist bicycle 10. By doing this, the load during traveling can be reduced.

When a child user with comparatively low athletic ability uses the electric assist bicycle 10, for example, a control model in which the torque ratio is comparatively high is applied to the electric assist bicycle 10. By doing this, unstable driving due to lack of the auxiliary power can be prevented.

In this manner, using the control model in accordance with the athletic ability of the user who uses the electric assist bicycle 10 makes it possible to control the auxiliary power generated by the driving device appropriately, thus making it possible to reduce the load on the user during traveling. Additionally, an accident caused by a sudden acceleration or unstable driving can be prevented.

### Variation of First Embodiment

Although the first embodiment describes the torque ratio (Tm/Th) being controlled to a certain value by the control model at a low speed, the present invention is not limited thereto. A configuration is also possible in which the control model changes the torque ratio depending on the situation such as riding up a slope.

Here, a case will be described in which three parameters (e.g. the torque ratio) are given to one control model for each of the case of a flat road face and the case of a road face with a certain inclination.

Assume, for example, that a pressure sensor is installed in a saddle part of the electric assist bicycle 10 and whether the user is stand-pedaling can be determined by the pressure sensor. The control device 100 may also determine that the user is riding up a slope if the pressure sensor detects that the user is stand-pedaling.

In this case, the auxiliary power control unit 102 controls the auxiliary power generated by the driving device 150 such that the torque ratio (Tm/Th) achieves the torque ratio (Tm/Th) for the case of a road face with a certain inclination. The control device 100 may also continue the same control until a predetermined period of time elapses even after the user sits on the saddle.

In the other words, the control model includes the torque ratio for the case of a flat road face and the torque ratio for the case of a road face with a certain inclination. In this case, when the user is sitting on the saddle, the auxiliary power is controlled using the torque ratio for the flat road face. When the user is not sitting on the saddle, the auxiliary power control unit 102 controls the auxiliary power using the torque ratio for the case of a road face with a certain inclination. Accordingly, even when riding on a slope, the auxiliary power is controlled appropriately.

Although an example of the control model having two kinds of torque ratios for a flat road face and a road face with a certain inclination was described as above, the control model is not limited thereto. The control device 100 may also use a control model having three or more torque ratios in accordance with the inclination angle of the road face.

The control device 100 may also use a control model including torque ratios (Tm/Th) corresponding to the road face inclination angles of 0-degree, 5-degrees, 8-degrees, 12 degrees, and 15 degrees, and so on, respectively, for example. As the inclination angle increases, the torque ratio (Tm/Th) increases.

In other words, the following relationship is satisfied;
torque ratio for inclination angle of 0 degrees < torque ratio for inclination angle of 5 degrees < torque ratio for inclination angle of 8 degrees < torque ratio for inclination angle of 15 degrees

Assume, for example, a case in which the electric assist bicycle 10 is provided with an inclination sensor, which enables measurement of the inclination of the road face. In this case, the auxiliary power control unit 102 selects a torque ratio in accordance with the inclination of the road face that was measured by the inclination sensor, from the plurality of torque ratios included in the control model. The auxiliary power control unit 102 then controls the auxiliary power generated by the driving device 150 such that the torque ratio achieves the selected torque ratio.

In other words, the auxiliary power control unit 102 may also control the auxiliary power using the control model having the torque ratio corresponding to the inclination angle of the road face. Accordingly, even when riding on a slope, the auxiliary power is controlled appropriately.

Note, that the method for obtaining the inclination is not limited to using the inclination sensor. The auxiliary power control unit 102 may also obtain the current position using the GPS, and obtain the inclination of road face of the current position from map information, for example. Also, the map information may be stored in a memory inside the control device 100, or received from an external server.

### Second Embodiment

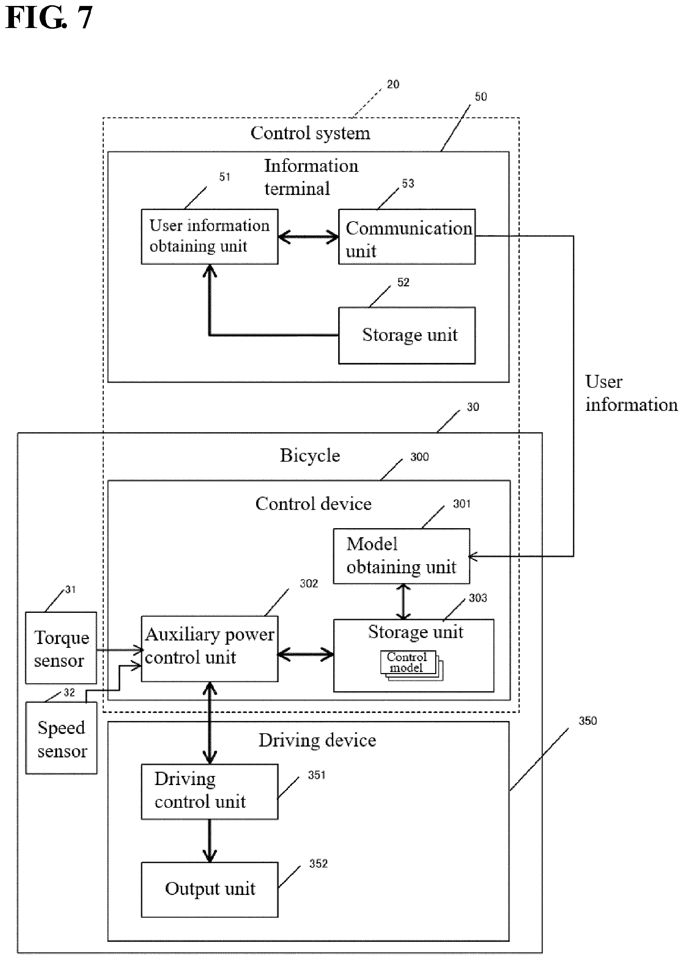

FIG. 7 is a block diagram illustrating a functional configuration of a control system 20 according to a second embodiment. The control system 20 includes the information terminal 50 and a control device 300. The information terminal 50 has the same configuration as the information terminal 50 of the first embodiment.

The information terminal 50 of this embodiment is different from that of the first embodiment in that a storage unit 303 has control models corresponding to the athletic ability levels of the users, instead of the control device 300 obtaining the control model by communicating with the server.

Note, that FIGS. 3A and 3B illustrate an example of data structures for holding the control models in the storage unit 303.

An application for transmitting a control request to the electric assist bicycle 10 is installed in the information terminal 50. When a user who uses the electric assist bicycle 30 starts up the application, the information terminal 50 displays a log-in screen on a display (not shown). When log-in is executed, the user information obtaining unit 51 then obtains the user information from the storage unit 52. Examples of the user information include the gender, age, height, and weight of the user.

The communication unit 53 then transmits the user information to the control device 300.

Then, a model obtaining unit 301 of the control device 300 specifies the athletic ability level of the user on the basis of the user information such as the gender, age, height, weight, and the like of the user. The model obtaining unit 301 selects the control model corresponding to the specified athletic ability level of the user. Next, the model obtaining unit 301 records the selected control model in the storage region such as a RAM (not shown) as a temporary file.

The control model includes the torque ratio (Tm/Th), the auxiliary power attenuation speed Sm (Km/h), the auxiliary power stop speed Sn (km/h), and the like, for example.

An auxiliary power control unit 302 has a function of controlling the auxiliary power generated by a driving device 350 on the basis of the control model. The auxiliary power control unit 302 controls the driving device 350 such that the ratio between the torque (Th) generated by the pedaling force of the user and the torque (Tm) generated by the auxiliary power achieves the torque ratio (Tm/Th) defined as the control model.

When the riding speed exceeds the auxiliary power attenuation speed Sm (Km/h), the auxiliary power control unit 302 controls the auxiliary power generated by the driving device 350 such that the torque ratio (Tm/Th) is attenuated in proportion to the excessive speed.

Furthermore, when the riding speed reaches the auxiliary power stop speed Sn (km/h), the auxiliary power control unit 302 controls the auxiliary power generated by the driving device 350 such that the torque ratio (Tm/Th) becomes 0.

In this manner, storing the control models in the storage unit 303 in the control device 300 makes it possible to apply the control model corresponding to the athletic ability of the user regardless the communication environment.

### Other Variations

Note, that the descriptions of the embodiments are examples for illustrating the present invention, and the present invention can be implemented by modifying or combining such embodiments as appropriate without departing from the spirit of the present invention.

The control device 100, for example, may also have a function of the user information obtaining unit 51 of the information terminal 50. In other words, a configuration is also possible in which the display provided in the control device 100 receives a log-in operation, and the control device 100 obtains the information about the user of the electric assist bicycle 10 along with the log-in operation.

Although the above embodiments describe that the user information obtaining unit 51 obtains the user information from the storage unit 52, the present invention is not limited thereto. In the first embodiment, for example, the storage unit 203 of the server 200 may also store the user information of the users.

Specifically, the user information obtaining unit 51 may request the user to input log-in information such as the user ID and the password, and may transmit the input log-in information to the server 200. The user ID is identification information for uniquely identifying the user.

If the log-in information is correct, the server 200 then obtains the user information stored in the storage unit 203 using the received user ID. Then, the model selection unit 202 specifies the athletic ability level of the user on the basis of the obtained information as the user information, such as the height, weight, age, gender, and the like. The model selection unit 202 then selects the control model corresponding to the athletic ability of the user out of the control models stored in the storage unit 203.

The present invention can also be realized by a process in which a program that realizes one or more functions of the above embodiments is provided to a system or a device, and one or more processors in a computer in the system or device read out and execute the program. Also, the present invention can also be realized by means of a circuit (e.g. ASIC) that realizes one or more functions.

### Appendix 1

A control system for controlling a driving device that generates auxiliary power for assisting a force that rotates a wheel of a bicycle, the control system comprising a hardware processor,
wherein the hardware processor is configured to:
obtain information about a user of the bicycle;
obtain, on the basis of the user information, a control model that is used for controlling the auxiliary power and corresponds to the athletic ability level of the user, and
control, on the basis of the obtained control model, the auxiliary power generated by the driving device.

### Appendix 2

A control method for controlling a driving device that generates auxiliary power for assisting a force that rotates a wheel of a bicycle, the control method comprising:
a step of obtaining, by at least one hardware processor, information about a user of the bicycle,
a step of obtaining, by at least one hardware processor, on the basis of the user information, a control model that is used for controlling the auxiliary power and corresponds to the athletic ability level of the user, and
a step of controlling, by at least one hardware processor, on the basis of the obtained control model, the auxiliary power generated by the driving device.

### LIST OF REFERENCE NUMERALS

- 5: Control system
- 10: Electric assist bicycle
- 11: Torque sensor
- 50: Information terminal
- 51: User information obtaining unit
- 52: Storage unit
- 53: Communication unit
- 100: Control device
- 101: Model obtaining unit
- 102: Auxiliary power control unit
- 103: Storage unit
- 150: Driving device
- 151: Drive control unit
- 152: Output unit

## Claims

1. A control system for controlling a driving device that generates auxiliary power for assisting a force that rotates a wheel of a bicycle, the control system comprising:
a user information obtaining unit configured to obtain information about a user of the bicycle;
a model obtaining unit configured to obtain a control model used for controlling the auxiliary power, the control model corresponding to an athletic ability level of the user, on the basis of the user information, and
an auxiliary power control unit configured to, on the basis of the obtained control model, control the auxiliary power generated by the driving device.

2. The control system according to claim 1,
wherein the model obtaining unit obtains, from an external server that stores a plurality of control models for respective athletic ability levels of the users, on the basis of the user information, a control model that corresponds to the athletic ability level of the user.

3. The control system according to claim 1, further comprising
a storage unit configured to store a plurality of control models for respective athletic ability levels of the users,
wherein the model obtaining unit obtains, from the storage unit, on the basis of the user information, a control model that corresponds to the athletic ability level of the user.

4. The control system according to any one of claims 1 to 3, wherein the control model includes a ratio of the auxiliary power to a load exerted by the user.

5. The control system according to any one of claims 1 to 4,
wherein the athletic ability level includes the weight of the user, and
the control model is set by weight.

6. The control system according to any one of claims 1 to 5,
wherein the athletic ability level includes the weight and height of the user, and
the control model is set for each of a plurality of sections divided by weight and height.

7. The control system according to any one of claims 1 to 6,
wherein the athletic ability level includes the gender and age of the user, and
the control model is set for each of a plurality of sections divided by gender and age.

8. A server comprising:
a user information obtaining unit configured to receive, from the control system according to any one of claims 1 to 7, information about a user who uses a bicycle;
a storage unit configured to store a plurality of control models for respective athletic ability levels of the users;
a model selection unit configured to select, out of the control models stored in the storage unit, a control model that corresponds to athletic ability of the user, and
a transmission unit configured to transmit the selected control model to the control system.

9. A control method comprising:
a step of obtaining information about a user of a bicycle;
a step of obtaining, on the basis of the user information, a control model used for controlling auxiliary power generated by a driving device for assisting a force that rotates a wheel of the bicycle, a control model corresponding to an athletic ability level of the user, and
a step of controlling, on the basis of the obtained control model, the auxiliary power generated by the driving device.

10. A program for causing a computer to execute the steps of the control method according to claim 9.
